**Europäisches Patentamt**

(19) **European Patent Office**

**Office européen des brevets**

(11) Numéro de publication : **0 034 992
B1**

# FASCICULE DE BREVET EUROPÉEN

(45) Date de publication du fascicule du brevet :
**11.05.83**

(51) Int. Cl.³ : **H 02 K 49/10**

(21) Numéro de dépôt : **81400299.4**

(22) Date de dépôt : **26.02.81**

(54) **Perfectionnements aux coupleurs à aimants permanents.**

(30) Priorité : **26.02.80 FR 8004236**

(43) Date de publication de la demande :
**02.09.81 Bulletin 81/35**

(45) Mention de la délivrance du brevet :
**11.05.83 Bulletin 83/19**

(84) Etats contractants désignés :
**AT BE CH DE GB IT LI LU NL SE**

(56) Documents cités :
**CH A 318 344
FR A 2 256 685
GB A 1 428 164
US A 2 340 122
US A 3 382 384
US A 3 730 488
US A 3 958 842
US A 4 072 370**

(73) Titulaire : **ANVAR Agence Nationale de Valorisation de la Recherche
43, rue Caumartin
F-75436 Paris Cedex 09 (FR)**

(72) Inventeur : **Yonnet, Jean-Paul LABORATOIRE D'ELECTRO-TECHNIQUE
ENSIEG Domaine Universitaire B:P: 46
F-38402 Saint Martin D'Heres (FR)**

(74) Mandataire : **Fort, Jacques et al
CABINET PLASSERAUD 84, rue d'Amsterdam
F-75009 Paris (FR)**

Jouve, 18, rue St-Denis, 75001 Paris, France

Perfectionnements aux coupleurs à aimants permanents

La présente invention concerne les coupleurs à aimants permanents destinés à transmettre des mouvements de rotation ou des couples entre un équipage menant et un équipage mené sensiblement coaxiaux, éventuellement à travers une paroi amagnétique.

On connaît déjà différents types de coupleurs dans lesquels les équipages comportent l'un et l'autre des aimants répartis suivant des surfaces cylindriques. Un premier type, dit plan, comporte des aimants généralement à aimantation axiale répartis sur deux couronnes cylindriques de même diamètre sur les deux équipages. Un second type, dit coaxial, comporte des aimants généralement à aimantation radiale, répartis suivant deux couronnes cylindriques placées l'une autour de l'autre.

On connaît les avantages de tels coupleurs : ils ne consomment pas d'énergie, autorisent des vitesses de rotation élevées, peuvent transmettre un couple à travers une paroi et fonctionnent en limiteurs de couple.

En contrepartie, les coupleurs connus ont l'inconvénient de présenter une instabilité, axiale dans le cas des coupleurs plans et radiale dans le cas des coupleurs coaxiaux. Cette instabilité, qui se traduit par l'apparition de forces importantes dès que les équipages s'écartent de leur position nominale, provoque une usure des paliers qui les portent ; elle est particulièrement gênante lorsqu'une précision élevée de transmission angulaire est nécessaire et conduit à utiliser des roulements à billes de précision qui ne peuvent supporter que de faibles charges radiales, ou lorsqu'on utilise des paliers magnétiques de raideur souvent faible.

On connaît par ailleurs (GB-A-1 428 164) des coupleurs destinés à transmettre des mouvements de translation entre une partie menante et une partie menée, mais il s'agit là de coupleurs qui ne posent pas des problèmes comparables.

L'invention vise à fournir un coupleur magnétique répondant mieux que ceux antérieurement connus aux exigences de la pratique, notamment en ce que les deux équipages restent en équilibre quasi indifférent radialement et axialement même pour des écarts notables par rapport à la position nominale et pour des couples transmis élevés. Dans ce but, l'invention propose un coupleur à aimants permanents destiné à transmettre des mouvements de rotation entre un équipage menant et un équipage mené, sensiblement coaxiaux, comportant l'un et l'autre des aimants disposés suivant des surfaces de rayon moyen différent sur l'équipage menant et sur l'équipage mené, caractérisé en ce que l'un des équipages comporte deux jeux de chacun plusieurs aimants répartis autour de l'axe, les jeux étant décalés dans le sens axial et encadrant dans le sens axial un jeu d'aimants également répartis autour de l'axe et portés par l'autre équipage, les aimants portés par l'un des équipages étant à aimantation axiale et ceux portés par l'autre équipage étant à aimantation radiale.

Un tel coupleur, que l'on peut qualifier de coupleur à aimantations en quadrature, présente un équilibre quasi indifférent même pour une plage notable de décentrements et de déplacements axiaux relatifs des équipages, pour un dimensionnement approprié. Cet équilibre quasi indifférent se conserve ou même s'améliore lorsque le coupleur transmet une charge.

Le couplage en quadrature des aimantations peut s'effectuer de façons différentes.

Dans un premier mode d'exécution, les aimants correspondants des deux jeux portés par un même équipage sont à aimantation axiale de sens opposé, tandis que les aimants du jeu unique porté par l'autre équipage sont à aimantation radiale.

Dans un autre mode d'exécution, les aimants correspondants des deux jeux portés par l'un des équipages sont à aimantation radiale et de sens contraire, tandis que les aimants du jeu unique porté par l'équipage restant sont à aimantation axiale, dans le sens des lignes d'induction créées par les deux autres aimants.

Le matériau constitutif des aimants sera choisi en fonction du mode de travail des aimants. Si, en particulier, les aimants doivent travailler en répulsion, on utilisera des matériaux ayant un champ coercitif élevé, tels que les ferrites, qui ont l'avantage d'être peu coûteuses, ou les aimants réalisés à base de terres rares et de cobalt, qui ont de meilleures performances mais un prix plus élevé.

L'invention sera mieux comprise à la lecture de la description qui suit de coupleurs qui en constituent des modes particuliers de réalisation donnés à titre d'exemples non limitatifs. La description se réfère aux dessins qui l'accompagnent, dans lesquels :

La figure 1 est un schéma de principe d'un premier coupleur, représenté en coupe suivant un plan passant par son axe.

La figure 2, similaire à la figure 1, montre un autre coupleur.

La figure 3 est une vue en perspective avec arrachement, montrant schématiquement la disposition des aimants d'un coupleur constituant une variante de celui montré en figure 2.

La figure 4 montre schématiquement une fraction du coupleur de la figure 3, vu en coupe au niveau du plan IV.

La figure 5 est un schéma de principe montrant une disposition relative d'aimants permettant d'obtenir un rendement maximum du matériau magnétique.

La figure 6 est un schéma similaire à la figure 5, montrant la condition à remplir pour obtenir un équilibre indifférent lorsque les aimants utilisés ont une section droite présentant une dimension grande par rapport à l'autre.

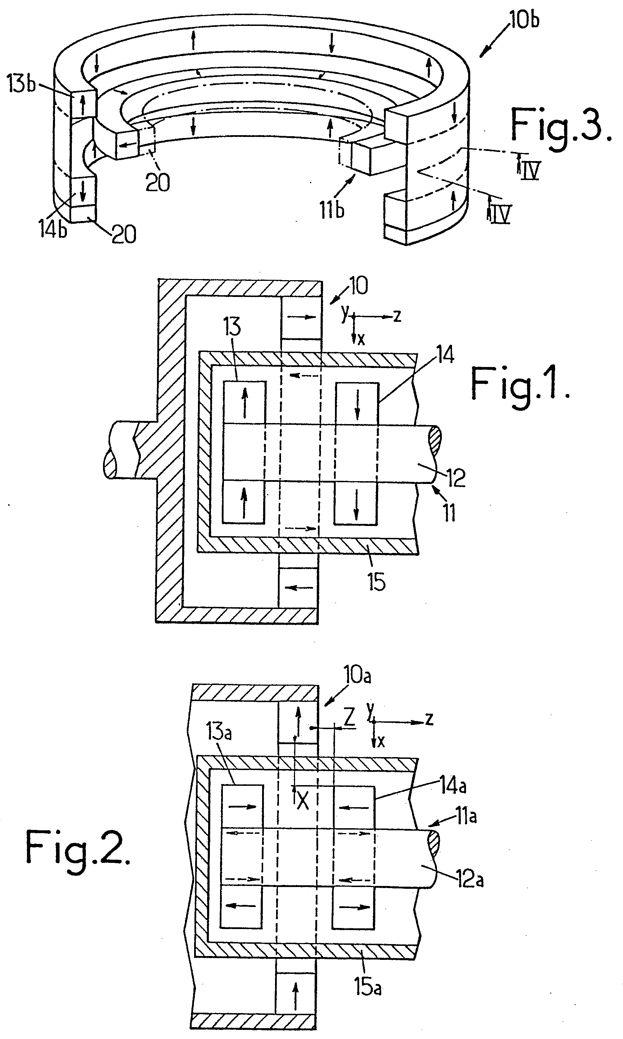

Les figures 1 et 2 montrent de façon très schématique la disposition de principe des deux types de coupleurs à aimantations en quadrature à équilibre quasi indifférent. Dans le cas montré en figure 1, l'équipage externe 10, qui peut être l'équipage menant ou l'équipage mené, comporte une série d'aimants répartis dans le sens circonférentiel de façon régulière et présentant une aimantation alternée parallèle à l'axe. Dans le mode de réalisation illustré, le jeu unique d'aimants portés par l'équipage 10 a une aimantation qui s'inverse six fois sur la périphérie.

L'équipage interne 11, qui peut être l'équipage mené ou menant comporte de son côté, sur un arbre 12, deux jeux d'aimants 13 et 14 à aimantation radiale, encadrant le jeu d'aimants portés par l'équipage 10 dans le sens axial. L'aimantation de chaque jeu s'inverse sur la périphérie autant de fois que l'aimantation des aimants de l'équipage 10. Deux aimants des jeux 13 et 14 placés face à face ont des aimantations opposés.

Dans le mode de réalisation montré en figure 2, l'équipage externe 10a comprend encore un seul jeu d'aimants, mais cette fois à aimantation radiale. Au contraire l'équipage interne 11a comporte, sur un arbre 12a, deux jeux d'aimants 13a et 14a à aimantation axiale. Les aimantations de deux aimants appartenant aux jeux 13a et 14a qui se font face sont encore opposées.

Les figures 1 et 2 montrent des coupleurs dans lesquels l'équipage externe 10 ou 10a porte un seul jeu d'aimants. Le mode de réalisation montré en figure 3 se différencie de celui de la figure 2 en ce que la disposition est inversée : c'est l'équipage externe 10b qui porte deux jeux d'aimants 13b et 14b, tandis que l'équipage interne 11b ne porte qu'un seul jeu d'aimants.

Les dimensions relatives des divers composants d'un coupleur suivant la figure 1, 2 ou 3 peuvent être déterminées par le calcul pour qu'il y ait équilibre indifférent aussi bien dans le sens axial que dans le sens radial lorsque le système est centré. Si on suppose que les deux jeux d'aimants portés par un même équipage sont identiques, le système est centré lorsque les deux équipages sont coaxiaux et que le plan médian du jeu d'aimants unique de l'un des équipages coïncide avec le plan médian entre les deux jeux d'aimants de l'autre équipage.

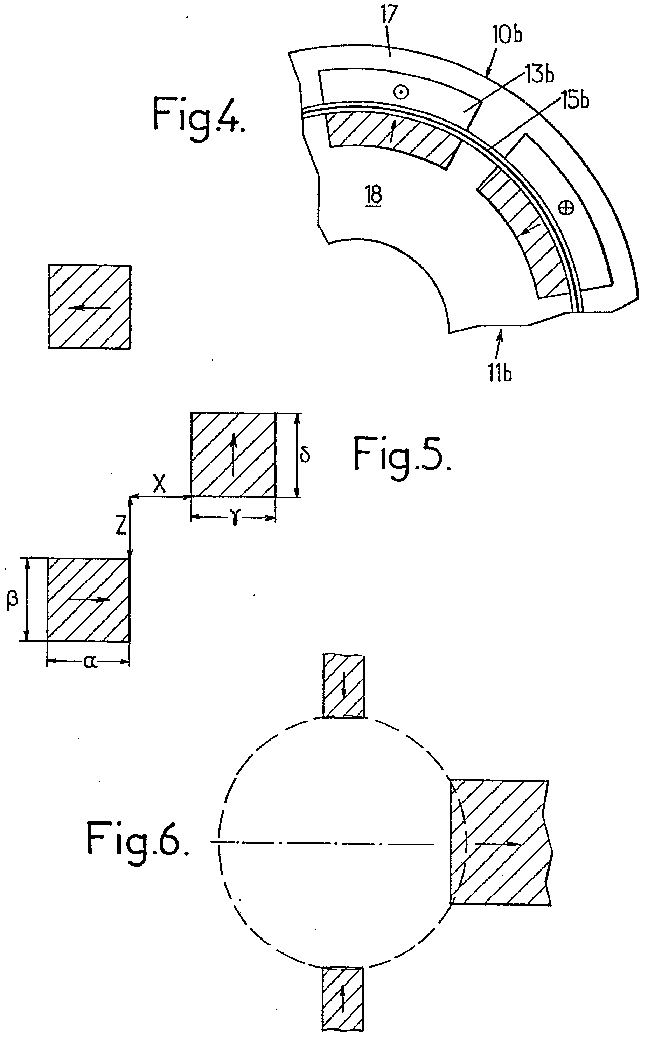

L'examen du coupleur montre que l'on dispose de six variables indépendantes, constituées par les dimensions $\alpha$, $\beta$, $\gamma$ et $\delta$ de la section droite des aimants supposée rectangulaire (figure 5) et les écartements X et Z (figures 2 et 5). Si l'on désigne par $x$ la direction radiale, par $y$ la direction tangentielle, et par $z$ la direction axiale, comme montré sur les figures 1 et 2, le calcul des six paramètres doit être fait pour remplir les conditions suivantes :

— l'équilibre doit être réalisé en position centrée,

— les dérivées premières (qui représentent les forces exercées suivant Ox et Oz), et les dérivées secondes de l'énergie magnétostatique du système par rapport à Ox et Oz (qui caractérisent la stabilité ou l'instabilité) doivent être faibles ou nulles, quel que soit le couple transmis,

— la dérivée de cette énergie doit être aussi élevée que possible par rapport à Oy, pour que le coupleur puisse exercer des forces tangentielles importantes.

Le calcul fait apparaître que l'équilibre indifférent est obtenu lorsque les diagonales de la section droite du jeu unique correspondent à des diagonales de la section droite des deux jeux, si les aimants sont à section droite carrée, comme indiqué schématiquement sur la figure 5. Cette section carrée sera généralement la plus avantageuse, car elle permet d'exercer le couple maximum à volume d'aimants déterminé.

Si au contraire, des raisons particulières conduisent à utiliser des aimants à section droite allongée, comme indiqué sur la figure 6, l'équilibre indifférent est obtenu quand les quatre angles les plus rapprochés des sections droites des aimants sont situés sur un même cercle.

L'équipage externe 10 ou 10a peut être séparé de l'équipage interne 11 ou 11a par une cloison étanche 15 ou 15a qui doit évidemment être en matériau amagnétique.

Il est évidemment souhaitable de réduire les entrefers et pour cela d'adopter des valeurs de X et de Z aussi faible que possible, ce qui impose une paroi 15 ou 15a mince.

Les dispositions représentées schématiquement en figure 1 à 3 sont susceptibles de nombreuses réalisations pratiques. En particulier, on peut utiliser des aimants de natures très diverses. On peut par exemple, comme indiqué sur la figure 4, constituer les aimants par des tronçons de caoutchouc magnétique, qui a l'avantage d'être facilement mis en forme mais l'inconvénient d'une aimantation relativement faible, de l'ordre de 0,22 T pour le « Ferriflex 3 » qui est disponible commercialement. Ces tronçons peuvent être cintrés et placés dans des évidements ménagés à cet effet sur des couronnes en matériau amagnétique 17 et 18. Un coupleur comportant un équipage interne de 118 mm de diamètre et un équipage externe ayant un diamètre intérieur de 122 mm, comprenant huit aimants de 9 × 9 × 35 mm a permis de transmettre un couple maximum d'environ 26 N cm et a montré l'absence de force axiale ou radiale même lorsque les deux équipages ne sont pas parfaitement centrés.

Un coupleur similaire à celui montré en figures 3 et 4, mais utilisant des aimants constitués par des ferrites, permet d'exercer un couple environ trois fois plus fort. L'emploi d'aimants associant les terres rares au cobalt (samarium-cobalt notamment) permet de multiplier le couple par 15 environ.

Il faut remarquer que les aimants travaillent en attraction quand le couple transmis est nul ou faible et partiellement en répulsion quand on approche du couple maximal. Sauf dans les cas où le couple à transmettre restera toujours faible par rapport au couple limite, il sera donc préférable d'utiliser des matériaux magnétiques durs, c'est-à-dire ayant un champ coercitif élevé.

Parmi ces matériaux, on peut citer les ferrites, mais aussi les aimants terres rares-cobalt.

Il faut encore remarquer que, pour une même disposition géométrique, deux configurations différentes des directions d'aimantation peuvent être adoptées, ce que montre par exemple une comparaison des figures 5 et 6. Dans tous les cas, les aimants sont soumis à un champ inverse résultant du champ extérieur et de leur champ démagnétisant propre, qui dépend de la forme géométrique des aimants. Les directions des aimantations et la forme géométrique représentées sur la figure 6 permettront d'utiliser un grand nombre de matériaux à aimants. Au contraire, la forme de la section droite représentée sur la figure 5 rendra nécessaire l'emploi d'aimants ferrites ou en terres rares-cobalt.

Pour augmenter le couple qu'est susceptible de transmettre le coupleur, on peut prévoir une bague ou des bagues 20 en matériau ferromagnétique (en fer doux par exemple) qui referment le flux magnétique qui n'est pas directement utile dans l'entrefer du coupleur. La présence des ces bagues a par contre un effet défavorable sur la stabilité, mais cet effet reste très faible si elles sont suffisamment loin de l'entrefer. En conséquence, on prévoira ou non une telle bague suivant que le couple maximum ou la stabilité optimale sont recherchés.

Les coupleurs qui viennent d'être décrits ajoutent, aux avantages des coupleurs à aimants permanents classiques, des avantages propres supplémentaires. L'absence d'efforts dans le sens axial et dans le sens radial réduit l'usure des paliers, ce qui rend le coupleur particulièrement adapté aux systèmes où une longue durée de vie sans possibilité d'intervention est nécessaire. Le coupleur permet de transmettre un mouvement entre deux arbres décalés. Il permet d'isoler chaque équipage des vibrations appliquées à l'autre équipage. Il peut se comporter comme un joint de cardan dans un domaine limité d'amplitude. Enfin, il est parfaitement adaptable à un système dans lequel les équipages sont montés dans des paliers de faible raideur, tels que les paliers magnétiques.

L'invention ne se limite évidemment pas aux modes particuliers de réalisation qui ont été représentés et décrits à titre d'exemples. En particulier, plusieurs coupleurs du genre décrit ci-dessus peuvent être associés en cascade, de façon à constituer un ensemble dans lequel l'un des équipages aura toujours un jeu d'aimants de plus que l'autre. Il doit être entendu que la portée du présent brevet s'étend à de telles variantes ainsi qu'à toutes autres restant dans le cadre des équivalences.

**Revendications**

1. Coupleur à aimants permanents destinés à transmettre des mouvements de rotation entre un équipage menant et un équipage mené, sensiblement coaxiaux, comportant l'un et l'autre des aimants disposés suivant des surfaces de rayon moyen différent sur l'équipage menant et sur l'équipage mené, caractérisé en ce que l'un des équipages (11, 11a, 10b) comporte deux jeux (13, 14 ; 13a, 14a ; 13b, 14b) de chacun plusieurs aimants répartis autour de l'axe, les jeux étant décalés dans le sens axial et encadrant dans le sens axial un jeu d'aimants également répartis autour de l'axe et portés par l'autre équipage (10, 10a, 11b), les aimants portés par l'un des équipages étant à aimantation axiale et ceux portés par l'autre équipage étant à aimantation radiale.

2. Coupleur suivant la revendication 1, caractérisé en ce que les aimants correspondants des deux jeux (13a, 14a) portés par un même équipage (11a) sont à aimantation axiale de sens opposé, tandis que les aimants du même jeu porté par l'autre équipage (10a) sont à aimantation radiale dans toute section droite du coupleur (figure 2).

3. Coupleur suivant la revendication 1, caractérisé en ce que les aimants correspondants (13, 14) des deux jeux portés par l'un des équipages (11) sont à aimantation radiale et de sens contraire, tandis que les aimants du jeu unique porté par l'équipage restant (10) sont à aimantation axiale dans le sens des lignes d'induction créées par les deux autres, dans toute section droite du coupleur (figure 1).

4. Coupleur suivant l'une quelconque des revendications précédentes, caractérisé en ce que les aimants sont de section droite approximativement carrée et sont disposés de façon qu'au repos les diagonales d'un aimant du jeu unique correspondent à des diagonales des aimants appartenant aux deux jeux.

5. Coupleur suivant l'une quelconque des revendications précédentes, caractérisé en ce que le flux magnétique qui n'est pas directement utile dans l'entrefer du coupleur, est refermé par une ou plusieurs bagues ferromagnétiques qui peuvent éventuellement relier deux jeux d'aimants d'un même équipage.

6. Coupleur suivant l'une quelconque des revendications précédentes, caractérisé en ce que les équipages sont séparés l'un de l'autre par une paroi d'étanchéité (15) en matériau amagnétique.

**Claims**

1. Permanent magnet torque coupler for transmitting rotation of a driving unit to a driven unit, said units being substantially coaxial and both comprising magnets arranged along surfaces having average radii which are different in the driving unit and in the driven unit, characterized in that one of said units (11, 11a, 10a) comprises two sets (13-14 ; 13a-14a ; 13b-14b) each having a plurality of magnets distributed about the axis, said sets being offset in the axial direction and axially straddling a set of magnets which are also distributed about the axis and are carried by the other unit (10, 10a, 11b), wherein the magnets carried by one of the units have an axial magnetization and those carried by the other unit have a radial magnetization.

2. Coupler according to claim 1, characterized in that the corresponding magnets of the two sets (13a-14a) carried by a same unit (11a) have axial magnetizations of opposite directions, while the magnets of the same set carried by the other unit (10a) have a radial magnetization in each cross-section of the coupler (Figure 2).

3. Coupler according to claim 1, characterized in that the corresponding magnets (13-14) of the two sets carried by one of the units have radial magnetizations in opposite directions, while the magnets of the single set carried by the remaining unit (10) have a magnetization which is axially directed in the direction of the induction lines created by the two other sets, in any cross-section of the coupler (Figure 1).

4. Coupler according to any one of the preceding claims, characterized in that the magnets have a substantially square cross-section and are so located that the diagonal lines of a magnet of the single set corresponds to the diagonal lines of the magnets of the other two sets in rest condition.

5. Coupler according to any one of the preceding claims, characterized in that the magnetic flux which is not directly useful in the air gap of the coupler is closed by one or more ferromagnetic rings which may possibly connect two sets of magnets belonging to a same unit.

6. Coupler according to any one of the preceding claims, characterized in that the units are separated from each other by a sealing wall (15) of amagnetic material.

**Ansprüche**

1. Permanentmagnetische Kupplung zur Übertragung von Drehbewegungen zwischen einem antreibenden Organ und einem angetriebenen Organ, die im wesentlichen koaxial angeordnet sind, wobei sowohl das eine Organ als auch das andere Organ Magnete aufweist, die auf dem antreibenden Organ und auf dem angetriebenen Organ auf Oberflächen mit unterschiedlichem mittlerem Radius angeordnet sind, dadurch gekennzeichnet, daß eines der Organe (11, 11a, 10b) zwei Sätze (13, 14 ; 13a, 14a, 13b) mit je mehreren Magneten aufweist, die um die Achse verteilt sind, wobei die Sätze in axialer Richtung gegeneinander versetzt sind und in axialer Richtung zwischeneinander einen Satz von Magneten einschließen, die ebenfalls um die Achse verteilt und von dem anderen Organ (10, 10a, 11b) getragen sind, und wobei die von einem der Organe getragenen Magneten axiale Magnetisierung und die von dem anderen Organ getragenen Magneten radiale Magnetisierung haben.

2. Kupplung nach Anspruch 1, dadurch gekennzeichnet, daß die Magnete der beiden von ein und demselben Organ (11) getragenen Sätze (13a, 14a) eine entgegengesetzte axiale Magnetisierung haben, wogegen die Magnete des von dem anderen Organ (10a) getragenen einzelnen Satzes in jedem Querschnitt der Kupplung radiale Magnetisierung aufweisen (Fig. 2).

3. Kupplung nach Anspruch 1, dadurch gekennzeichnet, daß die Magnete (13, 14) der beiden von einem (11) der Organe getragenen Sätze radiale und gegensinnige Magnetisierung aufweisen, wogegen die Magnete des von dem anderen Organ (10) getragenen einzigen Satzes in jedem Querschnitt der Kupplung axiale Magnetisierung in Richtung der von den beiden anderen Sätzen erzeugten Induktionslinien haben (Fig. 1).

4. Kupplung nach einem der vorhergehenden Ansprüche, dadurch gekennzeichnet, daß die Magnete im Querschnitt angenähert quadratisch sind und so angeordnet sind, daß in der Ruhestellung die Diagonalen eines Magneten des einzigen Satzes den Diagonalen der Magnete der beiden Sätze entsprechen.

5. Kupplung nach einem der vorhergehenden Ansprüche, dadurch gekennzeichnet, daß der im Luftspalt der Kupplung nicht unmittelbar nützliche Magnetfluß durch einen oder mehrere ferromagnetische Ringe einbezogen ist, die gegebenenfalls zwei Sätze von Magneten ein und desselben Organes verbinden können.

6. Kupplung nach einem der vorhergehenden Ansprüche, dadurch gekennzeichnet, daß die Organe durch eine Dichtwand (15) aus nicht magnetischem Material voneinander getrennt sind.

Fig.3.

Fig.1.

Fig.2.

Fig.4.

Fig.5.

Fig.6.

2